# EUROPÄISCHE PATENTSCHRIFT

(11) **EP 3 254 546 B1**
(45) Veröffentlichungstag und Bekanntmachung des Hinweises auf die Patenterteilung: **13.03.2019**
(21) Anmeldenummer: 16173507.1
(22) Anmeldetag: 08.06.2016
(51) Int. Cl.: A01B 63/10, A01B 73/02

(54) **LANDMASCHINE**
AGRICULTURAL MACHINE
ENGIN AGRICOLE

(43) Veröffentlichungstag der Anmeldung: 13.12.2017
(73) Patentinhaber: Kverneland Group Kerteminde A/S, 5300 Kerteminde (DK)
(72) Erfinder: Ritter, Markus, 78247 Hilzingen (DE); Gohl, Stefan, 78244 Gottmadingen (DE)
(74) Vertreter: Grünecker Patent- und Rechtsanwälte PartG mbB

(56) Entgegenhaltungen:
- EP-A1- 0 951 818
- EP-A1- 1 131 992
- DE-U1- 20 316 727

## Beschreibung

Die Erfindung betrifft eine Landmaschine gemäß Oberbegriff des Patentanspruchs 1.

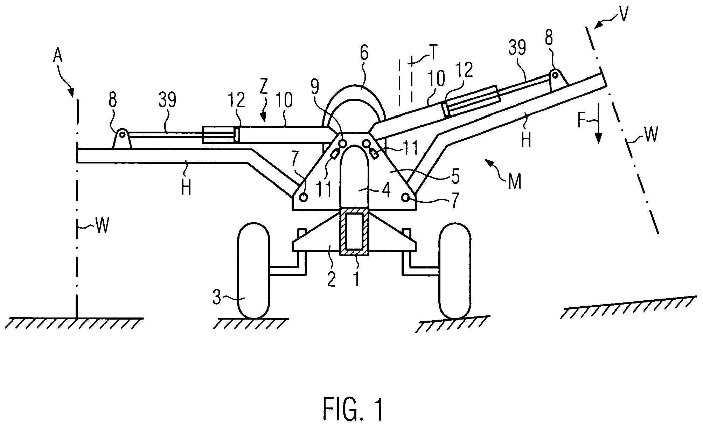

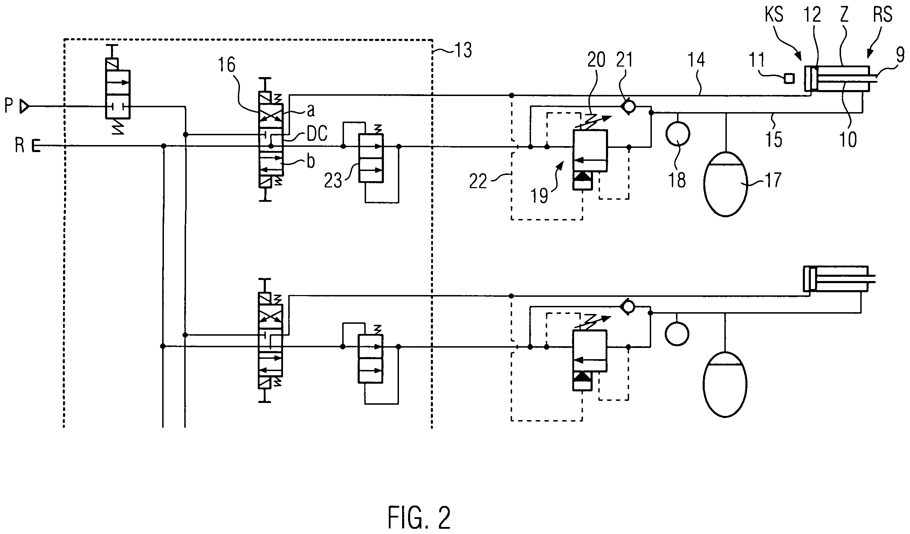

Bei einer solchen gattungsgemäßen Landmaschine des Typs ANDEX, vertrieben unter der Marke VICON der Kverneland Group, wird (Fig. 1, 2) der doppelseitig beaufschlagbar ausgebildete Hydraulikzylinder Z des Hubarms H am Tragrahmen 1 bei Verstellbewegungen des Arbeitswerkzeugs W, hier eines Rechkreisels, aus dem Hydrauliksystem 13 doppelseitig beaufschlagt. Der Hydraulikzylinder üblicherweise doppeltwirkend ausgelegt, um das Arbeitswerkzeug W aus der Transportstellung T sicher in die Arbeitsstellung A ausklappen zu können. Der hierfür vorgesehene Hydraulikkreis (Fig. 2) weist mit einem 4/3-Wege-Steuerventil 16 mit offener Mittelstellung OC verbundene Arbeitsleitungen 14, 15 des Hydraulikzylinders Z sowie in der mit der Kolbenstangenseite RS des Kolbens 12 verbundenen Arbeitsleitung 15 einen Druckspeicher 17 sowie einen Drucksensor 18 auf. Ferner ist in der zweiten Arbeitsleitung 15 ein durch eine Leitungsschleife mit Rückschlagventil 21 umgehbares, in Strömungsrichtung von der Kolbenstangenseite RS zum Steuerventil 16 öffnendes, einstellbares (Feder 20) und vorgesteuertes Senkbremsventil 19 vorgesehen. Das Senkbremsventil 19 ist über eine Aufsteuerleitung 22 aus der einen Arbeitsleitung 14 hydraulisch aufsteuerbar. Zum Absenken des Arbeitswerkzeugs W z.B. aus der Vorgewendestellung V in die Arbeitsstellung A wird über das Steuerventil 16 an der Kolbenseite KS des Kolbens 12 des Hydraulikzylinders Z Aufsteuerdruck aufgebaut, mit dem über die Aufsteuerleitung 22 das Senkbremsventil 19 aufgesteuert wird, sodass der Kolben 12 an seiner Kolbenstangenseite RS unter Ausfahren der Kolbenstange 9 aus dem Zylindergehäuse 10 Hydraulikmedium zum Tank R verdrängt Ein Druckspeicher 17 hat unter anderem die Aufgabe, in der Arbeitsstellung A einen bestimmten bzw. gewählten Entlastungsdruck für das Arbeitsgerät W zu halten. Der Entlastungsdruck wird von einem Drucksensor 18 in der zweiten Arbeitsleitung 15 überwacht und über eine Steuerleitung 30 der Maschinensteuerung CU gemeldet. Da jedoch mit dem auf der Kolbenseite des Kolbens 12 wirkenden Aufsteuerdruck beim Absenken des Arbeitswerkzeugs W in der zweiten Arbeitsleitung 15 Drucksteigerungen unvermeidbar sind, auch wegen der Übersetzungswirkung zwischen Kolbenseite und Kolbenstangenseite, beispielsweise bis zu 100 bar, wird das Signal des Drucksensors 18 empfindlich gestört, sodass die Maschinensteuerung abwartet, bis das Signal des Drucksensors wieder verarbeitet werden kann, um den Entlastungsdruck zu kontrollieren oder zu korrigieren, z.B. unter Berücksichtigung von Positionsmeldungen eines Positionsgebers 11 (Winkelgeber). Die hydraulische Leistung beispielsweise 40 bis 100 l/min, des Hydrauliksystems begrenzt somit zwangsweise die Geschwindigkeit beim Absenken des Arbeitswerkzeugs aus der Vorgewendestellung V in die Arbeitsstellung A. Da üblicherweise die Landmaschine mehrere Hubarme mit Arbeitsgeräten aufweist, die gleichzeitig verstellt werden, jedes Arbeitsgerät nur relativ langsam in die Arbeitsstellung. Das Absenken jedes Arbeitsgeräts W aus der Vorgewendestellung V in die Arbeitsstellung A soll jedoch idealerweise so schnell erfolgen, dass die Fahrgeschwindigkeit der Landmaschine auch bei einer 180°-Wende nicht reduziert zu werden braucht. Bei der bekannten Lösung lässt sich diese Anforderung nicht zuverlässig erfüllen. Wegen der unvermeidlichen Drucksteigerungen kann die Landmaschine bei erneut eingenommener Arbeitsstellung des Arbeitsgerätes nicht gleich wieder ordnungsgemäß arbeiten. Beim Absenken aus der Vorgewendestellung V in die Arbeitsstellung A wird über das aufgesteuerte Senkbremsventil 19 auch der Druckspeicher 17 weitestgehend entleert. In der Arbeitsstellung muss dann erneut Entlastungsdruck in gewünschter Höhe aufgebaut werden, was jedoch nicht in Echtzeit und rasch genug erfolgt, wodurch das Arbeitsgerät nach neuerlicher Verstellung in die Arbeitsstellung nicht gleich ordnungsgemäß arbeitet oder Schaden erleidet oder anrichtet. Dies gilt auch für spätere Korrekturen des Entlastungsdrucks durch Befüllen oder Entleeren des Druckspeichers 17, vor allem beim Entleeren des Druckspeichers 17 zum Verringern des Entlastungsdrucks, weil das Senkbremsventil 19 erst durch Beaufschlagen der Kolbenseite KS aufgesteuert werden muss, wobei wieder störende Druckimpulse auftreten können.

Bei einer aus EP 1 131 992 A1 bekannten Landmaschine, z.B. einer Mähmaschine, ist der das Arbeitsgerät tragende Hubarm relativ zur Trageinrichtung mittels zweier jeweils einfach wirkend betriebener Hydraulikzylinder mit zwei unabhängigen Stellbewegungen verstellbar. Die beiden Hydraulikzylinder sind mit ihren Zylinderböden aneinander befestigt, sodass die beiden Kolbenstangen miteinander fluchtend in entgegengesetzten Richtungen aus den Hydraulikzylindern zu Lagerbuchsen an der Trageinrichtung und dem Hubarm verlaufen. Der Auflagedruck des Arbeitsgeräts in der Arbeitsstellung ist einstellbar durch ein Paar zu den Hydraulikzylindern parallelen Zugfedern, oder durch einen hydraulischen Druckspeicher zwischen den Kolbenstangenseiten der beiden Hydraulikzylinder. Zum Einstellen der Transportstellung werden beide Kolbenstangen bis auf Anschlag Ihrer Kolben an den Zylinderböden eingefahren. Beide Hydraulikzylinder wirken als Zugzylinder. Dies erzwingt eine Transportstellung, in der am Hubarm noch ein Drehmoment in Absenkrichtung wirkt, da die beiden Hydraulikzylinder nicht in der Lage sind, eine Bewegung in Absenkrichtung zu erzeugen. In Schräglagen der Landmaschine am Hang ist ein Absenken eines überhängenden Arbeitsgeräts nicht sichergestellt.

Zum Einstellen der Arbeitsstellung wird die Kolbenstange eines Hydraulikzylinders ganz ausgefahren, und in der Folge die Kolbenstange des anderen Hydraulikzylinders fast ganz ausgefahren. Zum Umstellen von der Arbeitsstellung zur Vorgewendestellung wird bei ganz ausgefahrener Kolbenstange des anderen Hydraulikzylinders die Kolbenstange des einen Hydraulikzylinders ganz eingefahren. Zum Umstellen von der Vorgewendestellung zur Arbeitsstellung wird nur die Kolbenstange des einen Hydraulikzylinders nahezu ganz ausgefahren. Die Absenkgeschwindigkeit des Arbeitsgeräts von der Vorgewendestellung zur Arbeitsstellung wird dabei durch ein Druckbegrenzungsventil auf einen gewählten Wert begrenzt.

Weiteren Stand der Technik, insbesondere zu Heuwerbungsmaschinen, enthält EP 0 951 818 A1.

Der Erfindung liegt die Aufgabe zugrunde, eine Landmaschine der eingangs genannten Art dahingehend zu verbessern, dass die Verstellung des Arbeitsgeräts aus der Vorgewendestellung in die Arbeitsstellung ideal schnell ausführbar ist, und das Arbeitsgerät der Landmaschine nach neuerlicher Überführung in die Arbeitsstellung umgehend wieder optimal arbeitet.

Die gestellte Aufgabe wird mit den Merkmalen des Patentanspruchs 1 gelöst.

Da der an sich doppelseitig beaufschlagbar ausgebildete Hydraulikzylinder zumindest beim Absenken des Arbeitsgeräts von der Vorgewendestellung zur Arbeitsstellung als einfach wirkender Hydraulikzylinder mit nur einem Kolben, also einstufig, arbeitet, insbesondere als gezogener Hydraulikzylinder, der Hydraulikmedium mit aus dem Gewicht des angehobenen Arbeitsgeräts resultierenden hohem Druck verdrängt, lässt sich in der zweiten Arbeitsleitung ein so großer Volumenstrom erzielen, dass das Arbeitsgerät sehr schnell in die Arbeitsstellung gelangt, und die Fahrgeschwindigkeit selbst nach einer 180°-Wende am Vorgewende eines Feldes nicht reduziert zu werden braucht. Das Arbeitsgerät wird nämlich unabhängig von etwaigen weiteren Arbeitsgeräten an der Landmaschine und unabhängig von der hydraulischen Leistung des Hydrauliksystems schnell abgesenkt. Da am Hydraulikzylinder beim Absenken in die Arbeitsstellung das Gewicht des ausgehobenen Arbeitsgerätes zieht, lässt sich bei oder kurz vor Erreichen der Arbeitsstellung der gewünschte Entlastungsdruck in einem Druckspeicher sofort korrekt einstellen. Auch stören etwaige nachfolgende Korrekturen des Entlastungsdrucks das Signal des Drucksensors nicht, sodass die Anpassung des Entlastungsdrucks in Echtzeit erfolgen kann und die Landmaschine umgehend wieder optimal arbeitet. Auch in der Arbeitsstellung kann der Hydraulikzylinder einfach wirkend sein.

Bei einer bevorzugten Ausführungsform ist der Hydraulikzylinder in der Vorgewendestellung an einer Seite seines Kolbens über eine erste Arbeitsleitung mit dem Tank verbindbar, und auf der anderen Seite zumindest mit aus dem Gewicht des angehobenen Arbeitsgeräts resultierendem Druck beaufschlagbar, wobei zwischen der anderen Seite und dem Tank in einer zweiten Arbeitsleitung ein 2/2-Wege-Drosselventil mit Magnetbetätigung angeordnet ist. Der Magnet kann bei einer einfachen Ausführung ein Schwarz/Weiß-Magnet sein, oder sogar ein Proportionalmagnet. Ein wesentliches Charakteristikum des 2/2-Wege-Drosselventils mit Proportionsmagnet besteht darin, dass dieses in strikter Abhängigkeit vom Beaufschlagungsstrom oder der Spannung bzw. einer Dither-Frequenz den Volumenstrom in der zweiten Arbeitsleitung feinfühlig einstellen und variieren lässt, und somit eine optimal hohe Absenkgeschwindigkeit des Arbeitsgeräts möglich ist, um die Fahrgeschwindigkeit nach dem Vorgewende nicht reduzieren zu müssen. Dabei kann sogar ein vorbestimmtes Geschwindigkeitsprofil abgearbeitet werden, sodass das Arbeitsgerät zunächst sehr schnell und schließlich relativ sanft in die Arbeitsstellung gebracht wird.

Zweckmäßig ist der Hydraulikzylinder als Zugzylinder verbaut, der vom Gewicht des Arbeitsgeräts ausgezogen wird. Dies soll nicht ausschließen, den Hydraulikzylinder als Druckzylinder zu verbauen.

Zweckmäßig ist das 2/2-Wege-Magnet-Drosselventil durch eine Feder zu einer Sperrstellung und durch den Proportionalmagneten, vorzugsweise kombiniert mit einer Druckvorsteuerung, gegen die Feder in Durchgangsstellungen schaltbar. In stromlosem Zustand sperrt das 2/2-Wege-Proportional-Drosselventil ab, sodass der Hubarm bzw. das Arbeitsgerät in jeder beliebigen Position zuverlässig gehalten bleibt. Ähnlich kann der Schwarz-Weiß-Magnet arbeiten.

An die zweite Arbeitsleitung ist zwischen der Kolbenstangenseite und dem 2/2-Wege- Magnet-Drosselventil wenigstens ein Druckspeicher angeschlossen, wie dies konventionell ist. Nach einem besonderen Aspekt der erfindungsgemäßen Lösung kann jedoch der Druckspeicher kurz vor Erreichen der Arbeitsstellung zumindest durch Schalten des 2/2-Wege-Magnet-Drosselventils in die Sperrstellung aus dem aus dem Gewicht des Arbeitsgeräts resultierenden Druck auf wählbaren Entlastungsdruck für das Arbeitsgerät aufgeladen werden. Dies kann durch eine voreingestellte Programmroutine der Maschinensteuerung ausgeführt werden, oder in Abhängigkeit von der Verarbeitung von die Position (z.B. des Winkel) des Hubarms bzw. Arbeitsgeräts relativ zum Tragrahmen und den Druck repräsentierenden Signalen.

Grundsätzlich kann das Hydrauliksystem ein manuell und/oder magnetbetätigbares Mehrwege-Richtungssteuerventil für die beiden Arbeitsleitungen des Hydraulikzylinders aufweisen. Dies ist, vorzugsweise, ein 4/3-Wegeventil mit offener Neutralstellung, in der beide Arbeitsleitungen mit dem Tank verbunden werden. Soweit ist diese Konzept konventionell. Jedoch wird nach einem weiteren wichtigen Gesichtspunkt der erfindungsgemäßen Lösung der Druckspeicher bezüglich des Entlastungsdrucks über das Richtungssteuerventil und das 2/2-Wege-Magnet-Drosselventil in Echtzeit korrigiert, z.B. unter Berücksichtigung eines Hubarm-Positionssignals (Winkelsignal). Dies kann unter Überwachung durch den Drucksensor erfolgen, der stets den aktuellen Druck meldet und dessen Signal nicht durch unkontrollierte Drucksteigerungen gestört wird.

Besonders zweckmäßig ist der die Absenkgeschwindigkeit des Arbeitsgeräts von der Vorgewendestellung zur Arbeitsstellung definierende Volumenstrom in der zweiten Arbeitsleitung zum Tank mit dem 2/2-Wege-Magnet-Drosselventil unabhängig von der begrenzten hydraulischen Leistung des Hydrauliksystems, vorzugsweise einer Schlepperhydraulik, einstellbar. Denn es wird nur der Volumenstrom mittels des aus dem Gewicht des Arbeitsgeräts und des Hubarms resultierenden Drucks im Hydraulikzylinder gesteuert.

Um zumindest den Entlastungsdruck jederzeit korrigieren und/oder überwachen zu können, ist zweckmäßig in der zweiten Arbeitsleitung zwischen der Kolbenstangenseite und dem 2/2-Wege-Proportional-Drosselventil ein mit einer Maschinensteuerung verknüpfter Drucksensor vorgesehen. Der Drucksensor wird bei Betrieb des Hydraulikzylinders als einfach wirkender Hydraulikzylinder durch keine störenden Druckimpulse beeinträchtigt, da die Kolbenseite mit dem Tank verbunden ist.

Um der Maschinensteuerung jederzeit die relative Position des Arbeitsgeräts gegenüber beispielsweise dem Tragrahmen oder dem Boden zu übermitteln, kann ein mit einer Maschinensteuerung verknüpfter Melder für die Position vorgesehen sein, vorzugsweise ein Winkelgeber bei einer Anlenkung des Hydraulikzylinders und/oder des Hubarms.

Zweckmäßig sind am Tragrahmen an beiden Seiten, vorzugsweise teleskopierbare, Hubarme schwenkbar angeordnet. Speziell bei an vorderen Hubarmen angeordneten Arbeitsgeräten ist es wichtig, dass diese nach Aufgeben der Vorgewendestellung möglichst schnell wieder in die Arbeitsstellung überführbar sind und in dieser mit dem vorgewählten Entlastungsdruck arbeiten.

Das jeweilige Arbeitsgerät an dem Hubarm kann ein Rechkreisel beispielsweise eines Schwaders oder ein Mähwerk einer Mähmaschine sein.

Anhand der Zeichnung wird eine Ausführungsform des Erfindungsgegenstandes erläutert, wobei Fig. 1 und 2 relevanten Stand der Technik repräsentieren.

Es zeigen:
- Fig. 1: eine schematische Hinteransicht einer geschleppten Landmaschine mit zwei vorderen Hubarmen für Arbeitsgeräte, wobei der in Fig. 1 linke Hubarm in einer Arbeitsstellung ist, während der in Fig. 1 rechte Hubarm in einer Vorgewendestellung ist, und in einer zumindest strichpunktierten Darstellung eine Transportstellung angedeutet ist,
- Fig. 2: ein Blockschaltbild eines Hydraulikkreises einer Landmaschine entsprechend dem Stand der Technik, und
- Fig. 3: ein Blockschaltbild eines erfindungsgemäßen Hydraulikkreises auch für die Landmaschine gemäß Fig. 1.

Eine in Fig. 1 in einer Hinteransicht gezeigte Landmaschine M kann beispielsweise ein Schwader oder eine Mähmaschine sein.

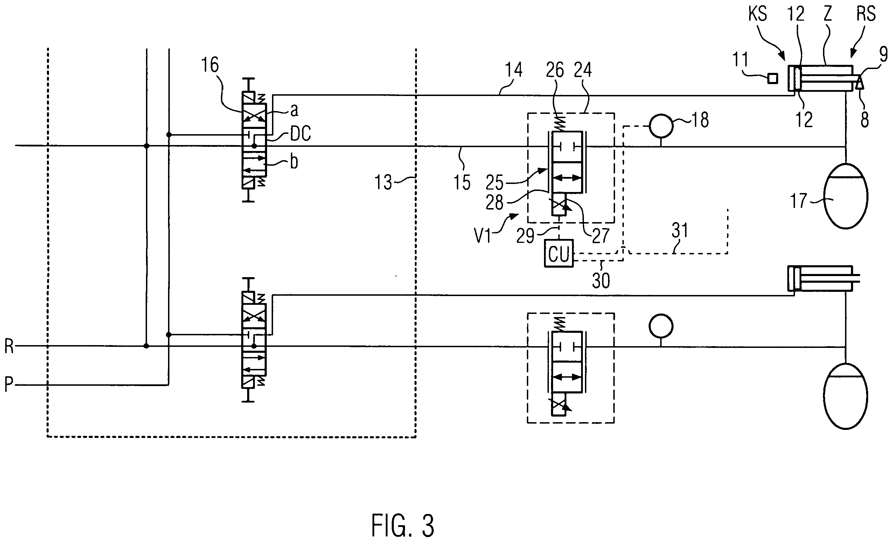

An einem in Fahrtrichtung orientierten Tragrahmen 1, 4 sind an Konsolen 2 Laufräder 3 eines Fahrwerks angeordnet. In einem nach oben gekröpften Abschnitt 4 des Tragrahmens ist eine Konsolenstruktur 5 hinter einem Bügel 6 zum Anschluss an einen nicht gezeigten Schlepper vorgesehen. An der Konsolenstruktur 5 sind an beiden Seiten des Tragrahmens 1, 4 in Anlenkungen 7 zwei hier abgekröpfte, z.B. vordere, Hubarme H angelenkt, deren jeder wenigstens ein Arbeitsgerät W trägt, das nur symbolisch durch eine Achse angedeutet ist. An jedem Hubarm H ist an einem Bock 8 eine Kolbenstange 39 in einem Zylindergehäuse 10 abgedichtet verschiebbaren Kolbens 12 eines Hydraulikzylinders Z angelenkt. Das Zylindergehäuse 10 ist in einer Anlenkung 9 an der Konsolenstruktur 5 angelenkt. Der Anlenkung 9 kann ein Melder 11 zugeordnet sein, beispielsweise ein Winkelsensor, der die relative Position des Hubarms H bzw. hier des Hydraulikzylinders Z gegenüber dem Tragrahmen 1, 4 an eine, in Fig. 1 nicht gezeigte Maschinensteuerung CU (Fig. 3) meldet.

In Fig. 1 ist der linke Hubarm H mit seinem daran befestigten Arbeitsgerät W in einer Arbeitsstellung A am Boden, wobei der doppelseitig beaufschlagbar ausgebildete Hydraulikzylinder Z einen vorwählbaren und einstellbaren Entlastungsdruck hält, der einen Anteil des Gewichts des Arbeitsgeräts W und des Hubarms H kompensiert.

Der in Fig. 1 rechte Hubarm H wird durch den Hydraulikzylinder Z in einer etwas vom Boden abgehobenen Vorgewendestellung V gehalten. Der in Fig. 1 rechte Hubarm H kann aus der gezeigten Vorgewendestellung V unter dem Gewicht F des Arbeitsgeräts W wieder in die Arbeitsstellung A abgesenkt werden.

Der Hydraulikzylinder Z ist hier als vom Gewicht des Arbeitsgeräts W ausziehbaren Zugzylinder verbaut, könnte alternativ (nicht gezeigt) jedoch als Druckzylinder verbaut sein.

Fig. 2 verdeutlicht den Hydraulikkreis bei der den Stand der Technik bildenden, bekannten Landmaschine des Typs ANDEX, vertrieben unter der Marke VICON der Kverneland Group, wie eingangs erläutert. Zum Absenken des Hubarms H aus der Vorgewendestellung V in die Arbeitsstellung A wird in Fig. 2 über das in die Steuerstellung b gestellte Richtungssteuerventil 16 in der Arbeitsleitung 14 zur Kolbenseite KS des Kolbens 12 Druck aufgebaut, der über die Aufsteuerleitung 22 das Senkbremsventil 19 hydraulisch aufsteuert. Dieser Aufsteuerdruck kann bis zu 40 bar betragen und beaufschlagt den Kolben 12 hier in Ausfahrrichtung der Kolbenstange 9. In Ausfahrrichtung wirkt auch die aus dem Gewicht des Arbeitsgeräts W resultierende Kraft F, sodass auch wegen der Übersetzungswirkung zwischen der Kolbenseite KS und der kleineren Kolbenstangenseite RS in der zweiten Arbeitsleitung 15 stromauf des Senkbremsventils 19 ein deutlicher Druckanstieg entsteht, der in seinem Ausmaß nicht kontrollierbar ist und vom Drucksensor 18 registriert wird. Über das aufgesteuerte Senkbremsventil 19 wird Hydraulikmedium durch die zweite Arbeitsleitung 15 in den Tank R ausgeschoben, wobei sich der Hubarm H abhängig von der hydraulischen Leistung des Hydrauliksystems 13 relativ langsam in die Arbeitsstellung absenktund auch der Druckspeicher 17 weitestgehend entleert ist. Danach muss unter Überwachung durch den Drucksensor 18 wieder der notwendige Entlastungsdruck im Druckspeicher 17 erzeugt werden, der durch das ggf. gegen eine Vorspannkraft geöffnete Rückschlagventil 21 und das in die Steuerstellung a verstellte Richtungssteuerventil 16 eingespeist wird. Dies dauert einige Zeit nach Erreichen der Arbeitsstellung A, sodass das Arbeitsgerät W zunächst nicht ordnungsgemäß arbeitet. Das Hydrauliksystem in Fig. 2 kann im Übrigen ein nur schematisch angedeutetes Stromregelventil 23 aufweisen. Muss später der Entlastungsdruck im Druckspeicher 17 gesenkt werden, erfordert dies wiederum Aufsteuerdruck für das Senkbremsventil 19 mit Störung des Drucksensorsignals.

In dem erfindungsgemäßen Hydraulikkreis gemäß Fig. 3 auch für die Landmaschine gemäß Fig. 1 sind entsprechende Komponenten mit denselben Bezugszeichen versehen wie in Fig. 2. An das Richtungssteuerventil 16, hier ein 4/3-Wege-Schieberventil mit offener Neutralstellung OC und den beiden Steuerstellungen a, b, jeweils eingestellt z. B. durch Schwarz/Weißmagneten über die Maschinensteuerung CU, sind die beiden Arbeitsleitungen 14, 15 angeschlossen. Die ersten Arbeitsleitung 14 führt zur Kolbenseite KS des Kolbens 12 im Zylindergehäuse 10 des Hydraulikzylinders Z. Die zweite Arbeitsleitung 15 führt hingegen zur kleineren Kolbenstangenseite RS des Hydraulikzylinders Z (Zugzylinder). Die Kolbenstange 9 ist gemäß Fig. 1 an den Bock 8 des Hubarms H angeschlossen, während das Zylindergehäuse 10 an die Anlenkung 9 der Konsolenstruktur 5 in Fig. 1 angeschlossen ist. Der Anlenkung 9 ist beispielsweise der Melder 11, vorzugsweise ein Winkelgeber, zugeordnet, der über eine Steuerleitung 31 mit der Maschinensteuerung CU verknüpft ist.

Erfindungsgemäß ist in der zweiten Arbeitsleitung 15, z. B. in einem gestrichelt hervorgehobenen Block 24, ein 2/2-Wege-Magnet-Drosselventil 25 angeordnet, das z. B. durch eine Feder 26 in Richtung zu einer Sperrstellung und durch einen Schwarz/Weiß- oder Proportionalmagneten 27 in Richtung zu variierenden Durchgangsstellungen beaufschlagt wird. Dem Magneten 27 kann optional eine Druckvorsteuerung 28 zugeordnet sein, um mit einem kleinen, leichten und mit moderatem Energieeinsatz betreibbaren Schwarz/Weiß- oder Proportionalmagneten 27 zurechtzukommen. Eine Steuerleitung 29 führt von der Maschinensteuerung CU zum Magneten 27, um das 2/2-Wege-Magnet-Drosselventil 25 zu schalten.

Das 2/2-Wege-Magnet-Drosselventil 25 dient u. a. zum Einstellen der Absenkgeschwindigkeit des Hubarms H bzw. des Arbeitsgeräts W aus der Vorgewendestellung V in die Arbeitsstellung A, wobei die Absenkgeschwindigkeit so hoch sein kann, dass selbst nach einer 180°-Wende der Landmaschine M die Fahrgeschwindigkeit nicht verringert zu werden braucht, um wieder die korrekte Arbeiststellung A und ein, z.B. bezüglich des Entlastungsanspruchs optimales Arbeiten des Arbeitsgeräts W zu gewährleisten. Dies resultiert aus dem Kunstgriff, ohne Beiziehen des Hydrauliksystems 13 nur den aus dem Gewicht hauptsächlich des Arbeitsgeräts W resultierenden Druck im Hydraulikzylinder Z zu kontrollieren.

Auch das Richtungssteuerventil 16 kann mit der Maschinensteuerung CU verknüpft sein.

Unter Verarbeitung der Signale des Drucksensors 18, des Melders 11 und beispielsweise abhängig von einer Programmierung der Maschinensteuerung CU wird kurz vor Erreichen der Arbeitsstellung A das 2/2-Wege-Magnet-Drosselventil 25 in die in Fig. 3 gezeigte Sperrstellung geschaltet, sodass unter dem Gewicht F des Arbeitsgeräts W vom Kolben 12 mit relativ hohem Druck ausgeschobenes Hydraulikmedium den Druckspeicher 17 wieder bis auf den vorgewählten und gewünschten Entlastungsdruck auflädt, und zwar ohne Mithilfe des Hydrauliksystems 13. Dabei können die Signale des Drucksensors 18 über die Steuerleitung 30 in Echtzeit verarbeitet werden, weil keine störenden Druckimpulse in der zweiten Arbeitsleitung 15 auftreten.

Sofern in der Arbeitsstellung A der Entlastungsdruck zu korrigieren ist, entweder durch Füllen des Druckspeichers 17 über das Richtungssteuerventil 16 aus der Druckquelle P (Steuerstellung a) bei gleichzeitiger Ansteuerung des Magneten 27, oder durch Ablassen von Hydraulikmedium aus dem Druckspeicher 17 (entweder Steuerstellung b oder offene Neutralstellung OC) bei gleichzeitiger Ansteuerung des Magneten 27, kann diese Korrektur in Echtzeit durchgeführt werden, da das Signal des Drucksensors 18 keinen störenden Druckimpulsen unterliegt.

Das 2/2-Wege-Magnet-Drosselventil 25 ist zweckmäßig als Ventilpatrone ausgebildet, die mit dem Block 24 an geeigneter Stelle in der zweiten Arbeitsleitung 15 verbaut sein kann, oder zusammen mit dem Druckspeicher 17 direkt am Zylindergehäuse 10 des Hydraulikzylinders Z verbaut wird. Der erfindungsgemäße Hydraulikkreis enthält weniger hydraulische Komponenten und ist störungsunanfälliger als der in Fig. 2 gezeigte, bekannte Hydraulikkreis.

Die Arbeitsgeräte W können bei einem Schwader Rechkreisel, hingegen bei einer Mähmaschine Mähwerke sein. Am Tragrahmen 1, 4 in Fig. 1 können mehr als zwei Hubarme H angeordnet sein, wobei speziell die in Fahrtrichtung vorderen in Bezug auf den nicht gezeigten Schlepper bzw. nahe dem Bügel 6 platzierten Hubarme H wie erläutert gesteuert werden können. In Fig. 1 ist gestrichelt auch die Transportstellung T des rechten Hubarms H angedeutet, in der das Arbeitsgerät W vollständig ausgehoben ist, sodass die Landmaschine M eine vorgegebene Transportbreite und Transporthöhe einhält. Zum Einhalten der gewünschten Transporthöhe bei ausladenden Arbeitsgeräten W können die Hubarme H (nicht gezeigt) längenverstellbar bzw. teleskopierbar sein.

## Patentansprüche

1. Landmaschine, insbesondere Heuwerbungs- oder -mähmaschine (M), mit einem ein Fahrwerk (3) aufweisenden Tragrahmen (1, 4), an welchem wenigstens ein Arbeitsgerät (W) über einen Hubarm (H) mittels eines doppelseitig beaufschlagbar ausgebildeten Hydraulikzylinders (Z) aus einer abgesenkten Arbeitsstellung (A) am Boden über eine vom Boden angehobene Vorgewendestellung (V) bis in eine voll ausgehobene Transportstellung (T) und umgekehrt verstellbar ist, wobei der Hydraulikzylinder (Z) zum Verstellen des Hubarms (H) über wenigstens ein Steuerventil (16) aus einem eine Druckquelle (P) und einen Tank (R) umfassenden Hydrauliksystem (13) betätigbar ist, und wobei das Gewicht des in die Vorgewendestellung (V) ausgehobenen Arbeitsgeräts (W) am Hydraulikzylinder (Z) in Richtung zur Arbeitsstellung (A) wirkt **dadurch gekennzeichnet, dass** der Hydraulikzylinder (Z) mit einem Kolben (12) zumindest zum Verstellen des Arbeitsgeräts (W) aus der Vorgewendestellung (V) in die Arbeitsstellung (A) als einfach wirkender Hydraulikzylinder betreibbar und in der Vorgewendestellung (V) an einer Seite (KS) eines Kolbens (12) über eine erste Arbeitsleitung (14) mit dem Tank (R) verbindbar ist.

2. Landmaschine nach Anspruch 1, **dadurch gekennzeichnet, dass** der Hydraulikzylinder (Z) in der Vorgewendestellung (V) auf der anderen Seite (RS) seines Kolbens (12) zumindest mit aus dem Gewicht (F) des angehobenen Arbeitsgeräts (W) resultierendem Druck beaufschlagbar ist, und dass zwischen der anderen Seite (RS) seines Kolbens und dem Tank (R) in einer zweiten Arbeitsleitung (15) ein 2/2-Wege-Magnet-Drosselventil (25) angeordnet ist, vorzugsweise mit einem Schwarz/Weiß-Magneten oder einem Proportional-Magneten (27).

3. Landmaschine nach Anspruch 2, **dadurch gekennzeichnet, dass** der Hydraulikzylinder (Z) als Zugzylinder vom Gewicht des Arbeitsgeräts (W) ausziehbar, und das 2/2-Wege-Magnet-Drosselventil (25) in der an der zweiten Arbeitsleitung (15) zur Kolbenstangenseite (RS) angeordnet ist.

4. Landmaschine nach Anspruch 2, **dadurch gekennzeichnet, dass** das 2/2-Wege-Magnet-Drosselventil (25) durch eine Feder (26) zu einer Sperrstellung und durch den Schwarz/Weiß- oder Proportionalmagneten (27), vorzugsweise in Kombination mit einer Druckvorsteuerung (28), gegen die Feder (26) in Durchgangsstellungen schaltbar ist.

5. Landmaschine nach Anspruch 2, **dadurch gekennzeichnet, dass** an die zweite Arbeitsleitung (15) zwischen der anderen Seite (RS) des Kolbens (12) und dem 2/2-Wege-Magnet-Drosselventil (25) wenigstens ein Druckspeicher (17) angeschlossen ist, der kurz vor Erreichen der Arbeitsstellung (A) zumindest durch Schalten des 2/2-Wege-Magnet-Drosselventils (25) in die Sperrstellung mit aus dem Gewicht (F) des angehobenen Arbeitsgeräts (W) resultierendem Druck auf einen wählbaren Entlastungsdruck des Arbeitsgeräts (W) aufladbar ist.

6. Landmaschine nach wenigstens einem der vorhergehenden Ansprüche, **dadurch gekennzeichnet, dass** das Hydrauliksystem (13) ein manuell und/oder magnetbetätigbares Mehrwege-Richtungssteuerventil (16) für die beiden Arbeitsleitungen (14, 15), vorzugsweise ein 4/3-Wegeventil mit offener Neutralstellung (OC), aufweist, und dass, vorzugsweise, ein Entlastungsdruck in einem Druckspeicher (17) über das Richtungssteuerventil (16) und/oder das 2/2-Wege- Drosselventil (25) in Echtzeit korrigierbar ist, vorzugsweise abhängig von der relativen Hubarm-Position und/oder gesteuert über einen Drucksensor (18).

7. Landmaschine nach Anspruch 2, **dadurch gekennzeichnet, dass** der die Absenkgeschwindigkeit des Arbeitsgeräts (W) von der Vorgewendestellung (V) zur Arbeitsstellung (A) definierende Volumenstrom in der zweiten Arbeitsleitung (15) zum Tank (R) mit dem 2/2-Wege-Magnet-Drosselventil (25) unabhängig von der hydraulischen Leistung des Hydrauliksystems (13), vorzugsweise einer Schlepperhydraulik, einstellbar ist.

8. Landmaschine nach Anspruch 2, **dadurch gekennzeichnet, dass** in der zweiten Arbeitsleitung (15) zwischen der anderen Seite (RS) des Kolbens (12) und dem 2/2-Wege-Magnet-Drosselventil (25) ein mit einer Maschinensteuerung (CU) verknüpfter Drucksensor (18) vorgesehen ist.

9. Landmaschine nach wenigstens einem der vorhergehenden Ansprüche, **dadurch gekennzeichnet, dass** ein mit einer Maschinensteuerung (CU) verknüpfter Melder (11) für die Position des Arbeitswerkzeugs (W) zumindest relativ zum Tragrahmen (1, 4) vorgesehen ist, vorzugsweise ein Winkelgeber bei einer Anlenkung (8, 9; 7) des Hydraulikzylinders (Z) und/oder des Hubarms (H).

10. Landmaschine nach Anspruch 1, **dadurch gekennzeichnet, dass** am Tragrahmen (1, 4) an beiden Seiten, vorzugsweise teleskopierbare, Hubarme (H) durch je einen Hydraulikzylinder (Z) schwenkbar angelenkt sind.

11. Landmaschine nach wenigstens einem der vorhergehenden Ansprüche, **dadurch gekennzeichnet, dass** das jeweilige Arbeitsgerät (W) ein Rechkreisel oder ein Mähwerk ist.

## Claims

1. Agricultural machine, in particular hay making machine or mowing machine (M), comprising a carrying frame (1, 4) and an undercarriage (3), at least one working device (W) at the carrying frame (1, 4), the working device (W) being adjustable via a lifting arm (H) and by means of a double-actuated hydraulic cylinder (Z) from a low working position (A) on the ground through a partially lifted position (V) into a fully lifted transport position (T) and vice versa, wherein the hydraulic cylinder (Z) for adjusting the lifting arm (H) can be actuated by at least one control valve (16) of a hydraulic system (13) containing a pressure source (P) and a tank (R) and wherein the weight of the working device (W) lifted into the partial lifted position (V) is acting on the hydraulic cylinder (Z) in a direction towards the low working position (A), **characterized in that** the hydraulic cylinder (Z) having a piston (12) at least for adjusting the working device (W) from the partially lifted position (V) into the low working position (A) is operated as a single acting hydraulic cylinder and can be connected in the partially lifted position (V) by a first working line (14) at one side (KS) of the piston (12) with the tank (R).

2. Agricultural machine according to claim 1, **characterized in that** in the partially lifted position (V) the hydraulic cylinder (Z) can be actuated at the other side (RS) of the piston (12) at least by pressure resulting from the weight (F) of the lifted working device (W), and that a 2/2-ways-magnet-throttling valve (25) is arranged in a second working line (15) between the other side (RS) of the piston (12) and the tank (R), the valve, preferably, including a black/white-magnet or a proportional magnet (27).

3. Agricultural machine according to claim 2, **characterized in that** the hydraulic cylinder (Z) can be extended by the weight of the working device (W) as a pulling cylinder, and that the 2/2-ways-magnet-throttling valve (25) is arranged in the second working line (15) extending to the piston rod side (RS) of the piston (12).

4. Agricultural machine according to claim 2, **characterized in that** the 2/2-ways-magnet-throttling valve (25) can be switched by a spring (26) to a blocking position and by the black/white-magnet or the proportional magnet (27) counter to the spring (26) into throughflow positions, preferably in combination with a pressure pilot control (28).

5. Agricultural machine according to claim 2, **characterized in that** at least one pressure accumulator (17) is connected with the second working line (15) extending between the other side (RS) of the piston (12) and the 2/2-ways-magnet-throttling valve (25), the pressure accumulator (17) shortly before the low working position (A) by the working device (W) is reached can be loaded to a selectable relief pressure for the working device (W) by pressure resulting from the weight (F) of the lifted working device (W) and at least by switching the 2/2-ways-magnet-throttling valve (25) into the blocking position.

6. Agricultural machine according to at least one of the preceding claims, **characterized in that** the hydraulic system (13) contains a manually and/or magnet-actuable multiway-directional control valve (16) for both working lines (14, 15), preferable a 4/3-multiways valve having an open neutral position (OC), and that, preferably, a relief pressure in a pressure accumulator (17) can be corrected in real time by the directional control valve (16) and/or the 2/2-ways-magnet-throttling valve (25), preferably depending on the relative lifting arm position and/or controlled by a pressure sensor (18).

7. Agricultural machine according to claim 2, **characterized in that** the volume flow in the second working line (15) to the tank (R), defining the lowering speed of the working device (W) from the partially lifted position (V) to the low working position (A) is adjustable by the 2/2-ways-magnet-throttling valve (25) independently from the hydraulic power of the hydraulic system (13), preferably of a tractor hydraulic system.

8. Agricultural machine according to claim 2, **characterized in that** a pressure sensor (18) linked to a machine control (CU) is provided in the second working line (15) between the other side (RS) of the piston (12) and the 2/2-ways-magnet-throttling valve (25).

9. Agricultural machine according to at least one of the preceding claims, **characterized in that** an indicator (11) linked to a machine control (CU) and used for indicating the position of the working device (W) at least relative to the carrying frame (1,4) is provided, preferably, an angle transmitter situated at a joint (8, 9; 7) of the hydraulic cylinder (Z) and/or of the lifting arm (H).

10. Agricultural machine according to claim 1, **characterized in that** the lifting arms (H) are swivably linked to both sides of the carrying frame (1, 4), each being pivotable by a respective hydraulic cylinder (Z) and that the respective lifting arm (H), preferably, can be extended and retracted in telescopic fashion.

11. Agricultural machine according to at least one of the preceding claims, **characterized in that** the respective working device (W) is a raking rotor or a mowing unit.

## Revendications

1. Machine agricole, notamment machine de fenaison ou de fauchage (M), comprenant un châssis porteur (1, 4), qui présente un train de roulement (3) et sur lequel au moins un outillage de travail (W) peut, par l'intermédiaire d'un bras relevable (H) et au moyen d'un vérin hydraulique (Z) pouvant être alimenté par les deux côtés, être déplacé d'une position de travail (A) abaissée au sol jusqu'à une position de transport (T) totalement soulevée, en passant par une position de relèvement en tournière (V) soulevée du sol, et inversement,
machine agricole
dans laquelle le vérin hydraulique (Z) pour le déplacement du bras relevable (H) peut être actionné par l'intermédiaire d'au moins une vanne de commande (16) d'un système hydraulique (13) comprenant une source de pression (P) et un réservoir (R),
et dans laquelle le poids de l'outillage de travail (W) soulevé dans la position de relèvement en tournière (V) agit au niveau du vérin hydraulique (Z) en direction de la position de travail (A),
**caractérisée en ce que** le vérin hydraulique (Z), avec un piston (12), peut, tout au moins pour le déplacement de l'outillage de travail (W) de la position de relèvement en tournière (V) à la position de travail (A), fonctionner en tant que vérin hydraulique à simple effet, et, dans la position de relèvement en tournière (V), être relié, d'un côté (KS) d'un piston (12), au réservoir (R) par l'intermédiaire d'une première conduite de travail (14).

2. Machine agricole selon la revendication 1, **caractérisée en ce que** le vérin hydraulique (Z), dans la position de relèvement en tournière (V), peut être sollicité sur l'autre côté (RS) de son piston (12), au moins avec la pression résultant du poids (F) de l'outillage de travail (W) soulevé, et **en ce qu'**entre l'autre côté (RS) de son piston et le réservoir (R), dans une deuxième conduite de travail (15), est agencée une vanne électromagnétique d'étranglement 2/2 voies (25), de préférence avec un aimant tout ou rien ou bien un aimant proportionnel (27).

3. Machine agricole selon la revendication 2, **caractérisée en ce que** le vérin hydraulique (Z), en tant que vérin de traction, est extractible par le poids de l'outillage de travail (W), et la vanne électromagnétique d'étranglement 2/2 voies (25) est agencée dans la deuxième conduite de travail (15) vers le côté tige de piston (RS).

4. Machine agricole selon la revendication 2, **caractérisée en ce que** la vanne électromagnétique d'étranglement 2/2 voies (25) peut être commutée par un ressort (26) vers une position de blocage, et peut être commutée en position passante par l'aimant tout ou rien ou bien proportionnel (27), de préférence en combinaison avec une commande pilote de pression (28), à l'encontre du ressort (26).

5. Machine agricole selon la revendication 2, **caractérisée en ce qu'**à la deuxième conduite de travail (15), entre ledit autre côté (RS) du piston (12) et la vanne électromagnétique d'étranglement 2/2 voies (25), est raccordé au moins un accumulateur de pression (17), qui, juste avant que l'on atteigne la position de travail (A), peut, au moins par commutation de la vanne électromagnétique d'étranglement 2/2 voies (25) en position de blocage, être chargé à une pression de décharge de l'outillage de travail (W) pouvant être choisie, à l'aide de la pression résultant du poids (F) de l'outillage de travail (W).

6. Machine agricole selon l'une au moins des revendications précédentes, **caractérisée en ce que** le système hydraulique (13) comprend une vanne de commande de direction multivoies (16) à actionnement manuel et/ou magnétique pour les deux conduites de travail (14, 15), de préférence une vanne 4/3 voies avec une position neutre ouverte (OC), et **en ce que**, de préférence, une pression de décharge dans un accumulateur de pression (17) peut être corrigée en temps réel par l'intermédiaire de la vanne de commande de direction multivoies (16) et/ou la vanne d'étranglement 2/2 voies (25), de préférence en fonction de la position relative du bras relevable et/ou de manière commandée par l'intermédiaire d'un capteur de pression (18).

7. Machine agricole selon la revendication 2, **caractérisée en ce que** le débit volumique dans la deuxième conduite de travail (15) vers le réservoir (R), qui définit la vitesse d'abaissement de l'outillage de travail (W) de la position de relèvement en tournière (V) à la position de travail (A), peut être réglé par la vanne électromagnétique d'étranglement 2/2 voies (25), indépendamment de la puissance hydraulique du système hydraulique (13), de préférence une hydraulique de tracteur.

8. Machine agricole selon la revendication 2, **caractérisée en ce que** dans la deuxième conduite de travail (15), entre ledit autre côté (RS) du piston (12) et la vanne électromagnétique d'étranglement 2/2 voies (25), il est prévu un capteur de pression (18) lié à une commande de machine (CU).

9. Machine agricole selon l'une au moins des revendications précédentes, **caractérisée en ce qu'**il est prévu un détecteur (11) lié à la commande de machine (CU), pour la position de l'outillage de travail (W) au moins par rapport au châssis porteur (1, 4), de préférence un capteur d'angle au niveau d'une articulation (8, 9; 7) du vérin hydraulique (Z) et/ou du bras relevable (H).

10. Machine agricole selon la revendication 1, **caractérisée en ce que** sur le châssis porteur (1, 4), des deux côtés, sont articulés de manière pivotante des bras relevables (H) de préférence télescopiques, chacun respectivement par l'intermédiaire d'un vérin hydraulique (Z).

11. Machine agricole selon l'une au moins des revendications précédentes, **caractérisée en ce que** chaque outillage de travail (W) est une toupie de râteau ou un groupe de fauchage.
